(19) Europäisches Patentamt
European Patent Office
Office européen des brevets

(11) Publication number: 0 209 699
A1

(12) **EUROPEAN PATENT APPLICATION**

(21) Application number: 86107814.5

(22) Date of filing: 07.06.86

(51) Int. Cl.[4]: C 09 D 5/08
C 09 D 3/70

(30) Priority: 17.06.85 US 745727

(43) Date of publication of application:
28.01.87 Bulletin 87/5

(84) Designated Contracting States:
BE DE FR GB IT NL SE

(71) Applicant: HENKEL CORPORATION
7900 West 78th Street
Minneapolis Minnesota 55435(US)

(72) Inventor: Toonen, James E.
2408 Friedship Lane
Burnsville, MN 55337(US)

(72) Inventor: Whyzmuzis, Paul D.
1760 Ranier Lane N.
Plymouth MN 55447(US)

(72) Inventor: Vertnik, Leonard R.
1225 Oakview Lane N.
Minneapolis MN 55441(US)

(74) Representative: von Kreisler, Alek, Dipl.-Chem. et al,
Deichmannhaus am Hauptbahnhof
D-5000 Köln 1(DE)

(54) **Corrosion-resistant coatings.**

(57) Corrosion-resistant coatings for metals which employ thickened alkaline earth complexes. This invention is an improvement in which a thermoplastic polymer is incorporated in the alkaline earth metal complex composition to provide improved properties. Polymers of polymeric fat acids are preferred with polyamides thereof being most preferred. The corrosion-resistant coating composition is particularly useful with ferrous metals, galvanized aluminum or magnesium surfaces, especially those in the nature of undercoats for automotive bodies, coatings for structural metals such as automotive frames and the like.

EP 0 209 699 A1

0209699

PATENT

Case 4454

## CORROSION-RESISTANT COATINGS

This invention relates to corrosion-resistant coatings for metals which employ thickened alkaline earth complexes. This invention is an improvement in which a thermoplastic polymer is incorporated in the alkaline earth metal complex composition to provide improved properties. The corrosion-resistant coating composition is particularly useful with ferrous metals, galvanized aluminum or magnesium surfaces, especially those in the nature of undercoats for automotive bodies, coatings for structural metals such as automotive frames and the like.

## BACKGROUND OF THE INVENTION

Corrosion-resistant coatings for complex automotive parts such as frames, motor cradles, suspension arms, axles and springs in use today are coatings incorporating alkaline earth complexes formulated with waxes to provide a coating which can be applied from a heated dip coating tank. The coatings are generally applied at temperatures of 225-275°F. By control of the temperature, the coating weight and thickness is controlled to result in a coating generally 3 to 5 mils. in thickness.

In order to provide an appropriate thickness of coating at the application temperatures, it is generally necessary that the coating composition have a viscosity at 250°F. of about 200-300 centipoises. The application viscosity should not significantly change in performance over long periods of time.

U.S. Patent 4,094,801 discloses alkaline earth metal complexes which are suitable for the coating of automotive parts. The patent deals specifically with protective coating compositions containing (a) magnesium containing complexes prepared by heating a mixture of magnesium hydroxide, magnesium oxide, hydrated magnesium oxide or a magnesium alkoxide; (b) an aloeophilic organic reagent, such as a carboxylic acid, a sulfonic acid, a pentavalent phosphorus acid or an ester or salt of any of these; (c) water and (d) an organic solubilizing agent. The amount of alkaline earth metals, such as magnesium, is such as to provide a basic composition. In use, the composition is pigmented such as with carbon black.

The alkaline earth complex compositions of U.S. Patent 4,094,801, formulated as shown in Example 18 of the patent utilizing the alkaline earth complex composition of Example 14, provides a relatively soft composition, much resembling that of a black shoe polish. The composition, or parts coated thereof when handled, tend to smear and leave a black residue with items it comes in contact with.

## BRIEF SUMMARY OF THE INVENTION

It has now been discovered that inclusion of certain thermoplastic polymers in the composition will toughen the composition so as to eliminate or minimize the smearability or abradability of the composition. Such thermoplastic polymers are having the following properties:

1. The polymer must be non gelling at the temperatures of application but which gells on cooling subsequent to the application. Thus, the polymer should not adversely affect the thixotropic properties of the alkaline earth complex composition.
2. The polymer must not significantly increase the viscosity of the composition during its application.
3. The polymer must be compatible with the composition and provide a toughness so as to provide transfer resistance to the coating.

Thus, the present invention in its broadest sense is a corrosion resistant composition comprising an alkaline earth complex wherein the improvement comprises the inclusion of a thermoplastic hot melt polymer in which the polymer is non-gelling at temperatures of application, does not significantly increase the viscosity of the composition during its application and provides a transfer resistant toughness to the composition.

The thermoplastic polymers which are polymers of a polymeric fat acid such as a dimeric fat acid, are the most desirable. The preferred polymers are the thermoplastic hot melt polyamide resin of a polymeric fat acid and a diamine. However, other polymers of

the polymeric fat acid such as the polyesters, polyester amides, polyurea, polyureamides, polyurethanes and the like. Thus the preferred polymers are the thermoplastic, substantially linear polymers derived from the dimerized fatty acids themselves as the corresponding diamines to provide a polymer containing in the polymer chain the divalent hydrocarbon group of a dimeric fat acid.

## DETAILED DESCRIPTION

As indicated earlier, the present invention is an improved corrosion resistant composition which is comprised of an alkaline earth metal complex and which includes in admixture therewith a thermoplastic polymer to provide transfer resistant properties.

The alkaline earth metal composition encompassed by this invention to which the thermoplastic polymer is added are those generally available from Lubrizol Corporation, such as Lubrizol 2030. Lubrizol 2030 is a magnesium complex such as described in U.S. Patent 4,094,801, the disclosure of which is incorporated by reference. As disclosed therein the magnesium complex is prepared by heating at temperatures above 30°C, a mixture of (a) magnesium compound such as magnesium hydroxide, magnesium oxide, hydrated magnesium oxide or a magnesium alkoxide, with (b) at least on oleophilic organic agent comprising a carboxylic acid, a sulfonic acid, a pentavalent phosphoric acid or an ester or alkali metal or alkaline earth metal complex, (c) water and (d) at least one organic solubilizing agent for component (b) which includes (1) non-polar liquid diluents, (2) crystalline and non-crystalline hydrocarbon waxes including natural hydrocarbon waxes such as petrolatum, paraffin and olefin waxes and synthetic hydrocarbon waxes such as polyethylene and other polyolefins; (3) waxy alcohol mixtures and (4) certain resins.

The preferred magnesium complex composition corrosion resistant coating for use in coating automotive frames and the like is that disclosed in Example 18 of U.S. Patent 4,094,801 which utilizes the solid, hot melt composition of Example 14 thereof. Illustrative of such preferred composition is Lubrizol 2030 which contains a black pigment such as carbon black.

Lubrizol 2030, the magnesium complex corrosion resistant coating is described by the supplier Lubrizol Corporation as a thermoplastic protective coating designed to be applied from a heated dip coating tank and has a dry waxy feel at ambient temperature. The composition to a large extent provides a coating which resembles a black waxy shoe polish composition which when touched or handled leaves a black residue on the surface coming in contact with the composition. While designed primarily to be applied as a dip-coating, other methods such as described in U.S. Patent 4,094,801 may be employed.

Lubrizol 2030 has the following properties and specification as described by the supplier:

TYPICAL PHYSICAL PROPERTRIES

| PROPERTY | SPECIFICATION |
|---|---|
| A. Color | Black |
| B. Flash Point (COC) | 400°F(204°C) minimum |
| C. Fire Point | 400°F(204°C) minimum |
| D. Autoignition Temperature | 765°F(407°C) |
| E. Weight per Gallon | |
| 1. Solid (ASTM D792-66) | about 9.5 lbs at 77°F (SG=1.14 25°C) |
| 2. Liquid (See note 1) | about 8.6 lbs at 250°F (SG=1.03 121°C) |
| F. Solids content (See not 2) | 99% minimum |
| G. Viscosity at 250°F (121°C) (Brookfield RVF Viscometer no. 1 spindle pre-heated to 250°F (121°C) 10 rpm 60 second reading) | 200 to 300 cps |

| | |
|---|---|
| H. Stability | |
| 1. At room temperature | Indefinite |
| 2. At application Temperature 230-250°F (110-121°C) | No significant change in viscosity or performance for 6 months (with constant, slow agitation) |
| I. Specific heat of the liquid | about 0.43 Btu/lb/°F (0.43 cal/gm/°C) |
| J. Total heat to melt | about 113 Btu/lb (75°F to 250°F) |
| K. Thermal conductivity | K=about 0.08 |
| L. Hardness, Penetration (ASTM D-1321-70) | 65 maximum at 77°F (25°C) |

Corrosion resistant protective coatings of this type are preferably applied from a heated dip-coating tank at temperatures at about 225-275°F, preferably 225-250°F (107-121°C). Application at this temperature will provide a coating generally about 3-5 mils in thickness which will start to harden upon cooling below 180°F. Control of the coating is achieved largely through control of the temperature as there is no sol-vent to control. Accordingly the thermoplastic polymer added to the magnesium complex coating material should not materially change the characteristics of the composition at the application temperature, other than adding a certain degree of toughness to the coating, so that a black residue is not left upon contact with the composition as would occur with a composition resembling a black shoe polish. By "toughness" as used herein it is accordingly meant that the composition is transfer resistant or will not smear, mar, or rub off upon contact in a manner as shoe polish does.

In order to avoid affecting the characteristics of the coating composition it is generally desirable that the thermoplastic polymer employed have a viscosity and be employed in an amount so as not to affect the viscosity at application temperatures which will affect the thickness of the coating. Generally the viscosity

of the coating composition will be about 100-400, preferably 200-300 centipoise at 250°F as determined by Brookfield RVF Viscometer No. 1 spindle, 10 rpm and 60 second reading. If the viscosity of the polymer or the amount employed raises the viscosity significantly it becomes necessary to modify the alkaline earth complex composition to which the polymer is added to compensate for the effect of the polymer.

As indicated earlier, the specific composition of the thermoplastic polymer is not critical so long as it is a hot melt thermoplastic polymer compatible with the alkaline earth metal complex coating composition and will not significantly change the application properties of the composition, such as viscosity of the composition which will affect the thickness of the coating applied. The polymer must be non-gelling at the temperature of application but gel on cooling. The polymer may accordingly be any polymer possessing these properties and may be a polyamide, polyester, polyamide ester, polyurethane, polyurea and the like.

The most desirable polymers are those prepared from the polymer fat acids so as to have a divalent hydrocarbon radical of a dimeric fat acid. Such polymers are those containing the recurring strutural unit

$$-\overset{|}{\underset{|}{C}}-D-\overset{|}{\underset{|}{C}}-$$

where D is a divalent hydrocarbon radical of a dimerized fat acid and contains 30-42 carbon atoms. The polymeric fat acids, predominantly of the dimeric species, i.e. polymeric fat acids containing at least about 70% by weight dimeric fat acids are well known and readily available commercially as are the various polymers hereof including polyamides, polyesters, polyesteramide, polyurea, polyureamides, polyurethanes and the like. For a detailed discussion and disclosure of the polymeric fat acids, their preparation and structures thereof and the various polymers thereof, reference is made to Canadian Patent 1,033,996, the disclosure of which is incorporated herein by reference.

Of the polymers described therein the preferred polymers are the polyamide polymers prepared by reaction of the polymeric fat acids containing from about 30% and preferably 60 or 70% by weight

dimeric fat acids with a diamine under the usual amidification condition i.e. 100-300°C for about 2-8 hours.

The polyamide resins may also include other copolymerizing acid and amine components and the diamine employed may be a single diamine or mixture of different diamines. In addition amounts of monomeric, monocarboxylic acids may be present, either short or long chain, i.e. 2-20 carbon atoms. These will include acids such as acetic, propionic and fatty monomeric acid such as tall oil acids, oleic, stearic, linoleic and residual monomeric fat acids from polymerizing fatty acids. These may be employed in an amount to adjust the viscosity of polyamide polymer to the desired viscosity polymers. Low viscosity polymers (below 3 poise at 250°F) can be used at higher levels without affecting the properties of the ultimate coating composition. Higher viscosity polymers need to be employed at lower amounts.

The diamines employed may be aliphatic, cycloaliphatic or aromatic diprimary diamines, which may be ideally represented by the formula

$$H_2N-R_1-NH_2$$

where $R_1$ is an aliphatic, cycloaliphatic or aromatic hydrocarbon radical preferably having from 2 to about 40 carbon atoms. Representative of such diamines are ethylene diamine, 1,2-diaminopropane, 1,3-diaminopropane, 1,3-diaminobutane, tetramethylene diamine, pentamethylene diamine, hexamethylene diamine, decamethylene diamine, octadecamethylene diamine, metaxylylene diamine, paraxylylene diamine, cyclohexylene diamine, bis(aminoethyl) benzene, cyclohexyl bis(methyl amine), diamino-dicyclohexyl methane, methylene dianiline ether diamines such as Jeffamine 230, 400 or 2000, and dimeric fat diamine. Cyclic diamines, such as piperazine or aminoethylpiperazine, may also be employed, particularly in combination with the alkylene diamines. The preferred diamines are the alkylene (2-6 carbon atoms) diamines. The diamine may be employed alone or mixtures of two or more may be employed. The most preferred diamines are the alkylene diamines in which the alkylene group has from 2-6 carbon atoms and mixtures thereof with dimeric fat diamine (preferably having 36 carbon atoms), either

diamines or piperazines.

The acids employed either as copolymerizing acid along with the dimeric fat acid or for reaction the dimeric fat diamine (dimer diamine) are aliphatic, cycloaliphatic or aromatic dicarboxylic acids or ester which may be defined ideally by the formulae:

$$R_2OOC\text{-}COOR_2$$

or

$$R_2OOC\text{-}R_3\text{-}COOR_2$$

Where $R_3$ is an aliphatic, cycloaliphatic or aromatic hydrocarbon radical preferably having from 1 to 20 carbon atoms and $R_2$ is hydrogen or an alkyl group (preferably having from 1 to 8 carbon atoms). Illustrative of such acids are oxalic, malonic, adipic, sebacic, suberic, pimelic, azelaic, succinic, glutaric, isophthalic, terephthalic, phthalic acids, naphthaline dicarboyxlic acids and 1,4- or 1,3-cyclohexane dicarboxylic acid.

Other copolymerizing reactants may be amino acids or the corresponding lactams represented by the following formula

$$H_2N(CH_2)_xCOOH$$

where x is an integer from 2 to 15, the corresponding lactams being represented by the formula

$$\underline{HN(CH_2)_xCO}$$

In general, the most common amino acids or corresponding lactams are aminocaproic acid (or epsilon caprolactam), aminoundecanoic acid and omega caprylactam where x is 5, 10 and 7 respectively.

Other difunctional coreactants are the monoalkanol amines which may ideally be represented by the formula

$$H_2N\ R_4OH$$

where R" is a divalent aliphatic hydrocarbon radical, desirably having from 2 to 8 carbon atoms and preferably an alkylene radical having from 2 to 8 carbon atoms and preferably an alkylene radical having from 2 to 8 carbon atoms such as monoethanolamine, propaneolamine, butanolamine, 2-amino-3-hexanol, 2-amino-4-pentanol, 5-amino-4-octanol, 3-amino-3-methyl-3-butanol. Where an alkanol amine is employed, a polyesterpolyamide product is provided.

Essentially molar equivalent amounts of carboxyl and amine

groups are employed in preparing the polyamide. Where an alkanol amine is employed, the carboxyl groups employed are essentially equivalent to the amine plus hydroxy groups. Where copolymerizing dicarboxylic acids or amino acids are employed, it is preferred that the carboxyl groups from the polymeric fat acid should account for at least about 30 equivalent percent of the total carboxyl groups present.

Harder resins (less flexible) provide harder coatings but ar apt to have lesser impact resistance. Softer resins provide softer coatings and are less likely to fracture, particularly at low temperature. Further, the desirable polymers will have softening points about 85-130°C and preferably about 100-110°C.

Dependent on the physical properties of the polymer, these may be employed in amounts up to 70-75% by weight of the blend with Lubrizol 2030. Generally lower levels, below 15%, provide coating mixtures having the desired application characteristics. With polymeric fat acid polyamides, suitable coating compositions are provided employing 1-30% by weight, and more desirably 5-20%.

The invention can best be illustrated further by means of the following examples in which all parts and percentages are by weight unless otherwise noted. In all of the examples Lubrizol 2030, commercially available from Lubrizol Corporation, was employed as the alkaline earth metal complex coating composition.

EXAMPLES

In the examples using polyamides other than commercial polyamides, the polymers were prepared by heating the mixture of reactants to 225°C and holding at that temperature for one hour; applying full vacuum (0.1 mm Hg) and continue heating for one hour at 225°C; breaking vacuum and discharging the polyamide polymer.

The composition of the polyamides employed in the examples to follow are:

| | |
|---|---|
| 1. Polymer 41 | Polyamide of 100 equivalent % of a polymerized tall oil fatty acid (40% Monomer; 50% Dimer; 10% Trimer); 60 equivalent % of |

| | | |
|---|---|---|
| | | ethylene diamine (EDA); 22 equivalent percent of hexamethylene diamine (HMDA); 15 equivalent % of dimer diamine (94% dimer); 3 equivalent % ether diamine (Jeffamine 2000). |
| 2. | Polyamide 42 | Same as 1 but only 2% ether diamine and 61% EDA. |
| 3. | Polyamide 43 | Same as 1 but only 1% ether diamine and 62% EDA. |
| 4. | Polyamide 45 | Same as 1 but 4% ether diamine; 60% EDA; 21% HMDA; 155 dimer diamine. |
| 5. | Polyamide 46 | Same as 1 but 4% ether diamine; 62% EDA; 19% HMDA; 15% dimer diamine. |

Commercially available polyamides
from Henkel Corporation

| | | |
|---|---|---|
| 6. | MM 6200 | Polyamides of polymerized tall oil fatty acids (1.4% M; 3.3% I; 93.9% D; 1.4% T) and mixtures of EDA and 1,3-diaminopropane. |
| 7. | MM6301 | Same as 6 but with dimer diamines instead of diaminopropane. |
| 8. | MM 6071 | Polyamides of polymerized tall oil fatty acids (12.9% M; 4.7% I; 71.4% D; 11.4% T) with added monomeric fat acid and mixtures of EDA and aminoethylpiperazine. |
| 9. | Versamid® 335 | EDA polyamide of polymerized tall oil fatty acids (40-50%M; 3-9%I; 34-45%D; 8-12%T) |

| | |
|---|---|
| 10. Versamid 930 | EDA polyamide of same polymerized tall oil fatty acids of 8 above. |
| 11. Versamid 759 | EDA and HMDA polyamide of polymerized tall oil fatty acids (12.9% M; 4.7% I; 71.4% D; 11.4% T) with added monomeric tall oil fatty acid and propionic acid. |
| 12. Versamid 750 | Similar to 11 above but without monomeric tall oil fatty acid and uses a mixture of polymerized tall oil fatty acids, one with dimer content of about 72%; the other with dimer content of 25-40% and a trimer content of 50-75%. |

The polyamide resins were then blended with the Lubrizol by heating the polyamide resin at 200°C and when the resin was melted the Lubrizol 2030 added. The amount of the resin and Lubrizol are employed to provide the desired weight ratios to be tested. The blend or mixture is stirred continuously for about 15 minutes at the 200°C temperature. The resins are then used in the dip coating tank for coating 12 gauge steel panels about 3" by 6". The panels are preheated and dipped in the composition at 275°F.

After coating the panels and cooling to -10°F, the panels are subjected to a Gravelometer Test following the recommended practice of the SAE J 400 of the Society of Automotive Engineers which is specified for use in General Motors Corporation Material Specification No. 9985404, dated 18 JN 80 (18 June 1980). Ford Motor Engineering Material Specification ESL-M7C67-A also specifies this SAE J 400 Gravelometer Test. The panels are then examined and rated in accordance with the rating classification of the General Motors Specification as Poor, Fair, Good and Excellent, numerically designated herein as 1, 2, 3 and 4 respectfully in the data presented herein.

The following Tables summarize the results obtained.

TABLE I

| Polyamide | % Weight Polyamide In Blend | Thickness (mils) Top/Bottom | | | | | Gravelometer Rating (1 to 4) | | | | |
|---|---|---|---|---|---|---|---|---|---|---|---|
| | | (1) | (2) | (3) | (4) | (5) | (1) | (2) | (3) | (4) | (5) |
| 45 | 10 | 2.3/2.4 | 2.5/2.6 | 2.7/2.4 | 2.7/2/3 | 2.2/2.4 | 1 | 1 | 1 | 1 | 1 |
| | 15 | 5.9/5.1 | 6.0/4.9 | 5.9/4.8 | 4.8/4.5 | 5.5/4.3 | 4 | 4 | 4 | 4 | 4 |
| | 20 | 6.6/6.6 | 6.2/5.5 | 6.0/6.1 | 6.2/6.0 | 5.8/5.6 | 4 | 4 | 4 | 4 | 4 |
| | 70 | 3.1/3.4 | 2.9/2.8 | 3.0/2.5 | 3.3/3.0 | 2.5/2.9 | 3 | 3 | 3 | 3 | 3 |
| 46 | 70 | 3.0/2.8 | 3.4/3.1 | 3.3/3.3 | 3.0/3.3 | 3.7/3.5 | 3 | 3 | 3 | 3 | 3 |
| 45 | 60 | 3.6/3.0 | 3.9/3.5 | 3.6/3.7 | 4.1/4.0 | 3.5/3.3 | 3 | 3 | 3 | 3 | 3 |
| 46 | 60 | 3.1/3.6 | 3.7/3.6 | 4.2/3.9 | 3.6/3.9 | 3.2/3.9 | 3 | 3 | 3 | 3 | 3 |
| 41 | 70 | 2.9/2.2 | 3.3/3.0 | 3.3/2.6 | 3.9/3.4 | 3.2/3.3 | 2 | 3 | 3 | 4 | 3 |
| | 65 | 3.5/4.6 | 4.3/4.7 | 4.4/4.6 | 3.7/4.8 | 4.1/4.6 | 4 | 4 | 3 | 4 | 4 |
| | 60 | 3.3/3.8 | 3.4/3.4 | 3.5/4.0 | 3.4/2.7 | 3.3/3.1 | 3 | 3 | 3 | 2 | 2 |
| | 50 | 4.9/4.8 | 3.9/2.8 | 4.3/3.3 | 4.8/3.9 | 5.3/4.0 | 3 | 2 | 3 | 3 | 3 |

TABLE I (CONT)

| Poly-amide | % Weight Polyamide In Blend | Thickness (mils) Top/Bottom | | | | | Gravelometer Rating (1 to 4) | | | | |
|---|---|---|---|---|---|---|---|---|---|---|---|
| | | (1) | (2) | (3) | (4) | (5) | (1) | (2) | (3) | (4) | (5) |
| 335 | 7.5 | 3.1/3.0 | 3.1/2.9 | 4.2/2.8 | 4.1/2.7 | 3.9/2.8 | 1 | 1 | 2 | 1 | 1 |
| | 10 | 5.1/3.4 | 5.2/3.8 | 5.0/3.8 | 5.0/4.3 | 5.7/4.7 | 2 | 3 | 2 | 3 | 3 |
| | 12.5 | 9.1/6.8 | 8.8/6.3 | 7.9/5.0 | 8.6/5.2 | 8.4/6.3 | 4 | 4 | 4 | 4 | 4 |
| 41 | 10 | 2.4/2.1 | 2.9/2.7 | 2.8/2.6 | 2.8/2.9 | 3.0/2.6 | 1 | 1 | 1 | 1 | 1 |
| | 20 | 6.9/5.8 | 6.0/4.6 | 6.7/5.9 | 8.9/6.3 | 7.2/7.3 | 3 | 3 | 3 | 4 | 3 |
| | 30 | 10.2/8.5 | 10/8.2 | 10.7/8.2 | 10/8.4 | 9.1/7.3 | 4 | 4 | 4 | 4 | 4 |
| | 40 | 10.1/10.7 | 10.1/9.9 | 11.1/10.0 | 10.6/10.2 | 10.9/11.0 | 4 | 4 | 4 | 4 | 4 |
| | 15 | 4.7/4.6 | 4.8/4.2 | 5.3/4.6 | 4.8/4.5 | 5.3/4.4 | 2 | 2 | 2 | 2 | 2 |

As can be seen from the foregoing the thinner coatings (2.5-4 mils) and the lower levels of polymer in the blend tend to give the better results. In some cases, however, relatively high levels of polymer in the blend provided good results at the low thickener levels.

The results of some additional runs can be seen from the folowing Table II.

TABLE II

| Polyamide | % Weight In Blend | Thickener (mils) Top | Thickener (mils) Bottom | Gravelometer Rating |
|---|---|---|---|---|
| 40 | 80 | 2.8 | 6.3 | 3 |
| | 70 | 3.5 | 8.8 | 4 |
| | 50 | 7.0 | 13.8 | 4 |
| 41 | 80 | 2.2 | 5.8 | 3 |
| | 70 | 2.3 | 4.0 | 2 |
| | 50 | 12.8 | 14.8 | 4 |
| 42 | 80 | 3.4 | 7.4 | 3 |
| | 70 | 3.4 | 6.2 | 3 |
| | 50 | 11.1 | 19.3 | 4 |
| 43 | 80 | 3.3 | 6.4 | 3 |
| | 70 | 4.0 | 8.3 | 3 |
| | 50 | 11.8 | 15.5 | 4 |
| 930 | 5 | 7.5 | 6.8 | 2 |
| | 10 | 10.0 | 10.3 | 3 |
| 6071 | 10 | 12.6 | 7.8 | 4 |
| | 15 | 22.6 | 13.7 | 4 |
| 6245 | 10 | 16.1 | 8.6 | 4 |
| | 5 | 14.8 | 7.8 | 3 |
| 335 | 10 | 2.4 | 7.8 | 2 |

In another set of experiments the following results were obtained:

TABLE III

| Polyamide | % Weight In Blend | Viscosity at 250°F (Poise) | Ball & Ring Softening Point (°C) | Thickness (mils) Top/Bottom | | Gravelometer Rating (1 to 4) | |
|---|---|---|---|---|---|---|---|
| | | | | (1) | (2) | (1) | (2) |
| 335 | 5 | 0.8 | 92 | 8/14 | 1.8/2.3 | 2 | 2 |
| | 10 | 1.2 | 93 | 3.5/4.5 | 3.7/4.1 | 3 | 2 |
| | 15 | 2.1 | 93 | 2.2/2.6 | 10/19 | 4 | 4 |
| 750 | 5 | 1.1 | 95 | 3.5 | 2/8 | 3 | 2 |
| | 10 | 1.6 | 95 | 3.6/4.8 | 3.4/3.8 | 2 | 4 |
| | 15 | 2.9 | 96 | 6/8 | 6/7 | 4 | 4 |
| 930 | 5 | 1.6 | 97 | 6.5/7 | 3/13 | 3 | 3 |
| | 10 | 2.0 | 97 | 5/7 | 5/6 | 4 | 4 |
| | 15 | 4.1 | 97 | 10/12 | 10/13 | 4 | 4 |
| 6200 | 5 | 1.6 | 97 | 7/8 | 7.1/7.7 | 4 | 4 |
| 6301 | 5 | 1.4 | 97 | 3.9/4.9 | 3.8/4.2 | 2 | 3 |
| 6071 | 5 | 1.1 | 95 | 3/4 | 4/19 | 2 | 4 |
| | 10 | 2.1 | 95 | 5.5 | 5/6 | 3 | 4 |
| | 15 | 3.6 | 93 | 12/13 | 11/16 | 4 | 4 |

WHAT IS CLAIMED IS:

1. In a corrosion resistant protective coating composition comprised of a thickened alkaline earth metal complex, the improvement wherein said composition includes a thermoplastic polymer in an amount effective to toughen said composition without significantly affecting the coating characteristics of said thickened alkaline earth metal complex coating composition.

2. In a coating composition defined in claim 1 wherein said thermoplastic polymer is (a) non-gelling at temperatures at which such composition is applied to a substrate, but which gels on cooling to ambient temperature, and (b) does not significantly increase the viscosity of the composition on application to a substrate.

3. In a composition as defined in claim 2 wherein said temperature of application is about 225-275°F and said viscosity during an application is about 100-400 centipoise.

4. A composition as defined in claim 1 in which said thermoplastic polymer is a polymer containing the recurring structural unit:

$$-\overset{|}{\underset{|}{C}}-D-\overset{|}{\underset{|}{C}}-$$

wherein D is the divalent hydrocarbon radical of a dimerized fat acid.

5. A composition as defined in claim 4 in which D contains from 30-42 carbon atoms.

6. A composition as defined in claim 4 in which said polymer is a polyamide resin.

7. A composition as defined in claim 6 in which said polyamide resin is the reaction product of an acid component comprising

a polymeric fat acid containing from about 60% by weight of a dimeric fat acid and an amine component comprising an aliphatic, cycloaliphatic or aromatic diprimary diamine.

8. A composition as defined in claim 7 wherein said acid component includes a monomeric monocarboxylic acid containing from 2-20 carbon atoms.

9. A composition as defined in claim 8 wherein said monocarboxylic acid is selected from the group consisting of acetic acid, propionic acid and a fatty acid containing about 18 carbon atoms.

10. A composition as defined in claim 6 wherein said polymeric fat acid is polymerized tall oil fatty acids having a dimeric fat acid content in excess of 70% by weight and said diamine is an alkylene diamine in which the alkylene group contains from 2-6 carbon atoms.

11. A composition as defined in claim 10 in which said alkylene diamine is selected from the group consisting of ethylene diamine and hexamethylene diamine and mixtures thereof.

12. A composition as defined in claim 6 wherein said polymeric fat acid is polymerized tall oil fatty acids having a dimeric fat acid content of about 30-45 percent by weight, a trimeric fat acid content of about 8-12%, and intermediate content of 3-10% with the remainder being a monomeric fat acid, and said diamine is ethylene diamine.

European Patent Office

# EUROPEAN SEARCH REPORT

0209699
Application number

EP 86 10 7814

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | GB-A-2 131 444 (DAI-ICHI KOGYO SEIYAKU)<br>* Abstract; page 3, lines 35-43 *<br>--- | 1 | C 09 D 5/08<br>C 09 D 3/70 |
| A | EP-A-0 037 442 (ICI AMERICAS)<br>* Claim 1; page 4, paragraph 3 *<br>--- | 1 | |
| A | EP-A-0 108 953 (N.L. KIMES ASSOCIATES)<br>* Claims *<br>--- | 1 | |
| A | FR-A-2 349 643 (THE LUBRIZOL CORP.)<br>* Claims 1,36; pages 31, example 18 * & US - A - 4 094 801 (Cat. D)<br>--- | 1 | |
| A | US-A-3 876 574 (M. NAGAHISA)<br>* Claims *<br>----- | | TECHNICAL FIELDS SEARCHED (Int Cl.4)<br>C 09 D |

The present search report has been drawn up for all claims

| Place of search | Date of completion of the search | Examiner |
|---|---|---|
| THE HAGUE | 19-09-1986 | GIRARD Y.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82